# FASCICULE DE BREVET EUROPEEN

(11) **EP 0 780 622 B1**
(45) Date de publication et mention de la délivrance du brevet: **31.05.2000**
(21) Numéro de dépôt: 96402707.2
(22) Date de dépôt: 12.12.1996
(51) Int. Cl.: F16M 1/00, B60H 1/00

(54) **Dispositif d'entraînement à montage simplifié pour volet de réglage d'un flux d'air**
Antriebsvorrichtung mit einfacher Montage für Luftströmungseinstellungsklappe
Actuator with simplified mounting features for air flow regulating vane

(30) Priorité: 22.12.1995 FR 9515424
(43) Date de publication de la demande: 25.06.1997
(73) Titulaire: VALEO CLIMATISATION, 78321 La Verrière (FR)
(72) Inventeur: Scalone, Orlando, 95100 Argenteuil (FR)

(56) Documents cités:
- EP-A- 0 193 794
- US-A- 4 768 545

## Description

L'invention concerne un dispositif d'entraînement d'un organe mobile disposé à l'intérieur d'un boîtier, notamment pour le réglage d'un flux d'air dans un appareil de chauffage/ventilation ou de climatisation de l'habitacle d'un véhicule, comprenant un moteur fixé extérieurement sur la paroi du boîtier, comportant un arbre de sortie en saillie vers l'intérieur du boîtier, et un levier comportant un moyeu monté fixe en rotation sur l'arbre et au moins un bras s'étendant transversalement à l'axe de l'arbre à l'intérieur du boîtier, le moyeu traversant une ouverture ménagée dans la paroi du boîtier.

Dans un tel dispositif, le moteur est habituellement fixé sur le boîtier par plusieurs vis, dont la mise en place et le serrage nécessitent un temps relativement long sur une chaîne de montage. De même, lorsqu'il est nécessaire de démonter le moteur, cette opération est compliquée par la multiplicité des vis.

Le but de l'invention est de simplifier et de rendre plus rapide l'assemblage du moteur sur le boîtier et son démontage.

Un autre but de l'invention est de permettre un pré-position-nement du levier sur la paroi du boîtier, facilitant l'alignement de l'arbre avec le moyeu et son engagement dans celui-ci.

L'invention vise notamment un dispositif du genre défini en introduction, et prévoit que:
- le moteur est fixé au boîtier par un seul élément de fixation rapporté tel qu'une vis, son positionnement étant complété par une coopération de formes entre le moteur et le boîtier, une butée solidaire de ce dernier, disposée par rapport à l'axe à une distance angulaire dudit élément de fixation supérieure à un angle droit, présentant une face d'appui tournée vers le boîtier pour solliciter vers celui-ci une patte solidaire du moteur;
- le moyeu présente des saillies radiales en regard de la face extérieure de la paroi du boîtier, cette dernière étant emprisonnée axialement entre lesdites saillies radiales et le(s)dit(s) bras; et
- ladite ouverture est allongée et présente, en un endroit de sa longueur, des élargissements permettant aux saillies radiales du moyeu de traverser l'ouverture de l'intérieur vers l'extérieur du boîtier lorsque le levier est dans une orientation déterminée, dite de passage, autour de l'axe de son moyeu,
l'ensemble formé par le moteur et le levier pouvant être déplacé à peu près parallèlement à la longueur de l'ouverture entre une position d'emmanchement où le moteur est libre de s'approcher ou de s'éloigner du boîtier dans la direction de l'axe pour engager l'arbre dans le moyeu ou l'en dégager, et une position de fixation dans laquelle la patte est retenue par la butée et l'élément de fixation peut être mis en place.

Des caractéristiques optionnelles de l'invention, complémentaires ou alternatives, sont énoncées ci-après :
- L'ouverture est allongée sensiblement de haut et bas et lesdits élargissements sont prévus dans sa région d'extrémité supérieure.
- L'élément de fixation et la butée sont disposés respectivement plus haut et plus bas que l'axe.
- L'ouverture présente un étranglement à une largeur légèrement inférieure au diamètre du moyeu pour interdire au levier de quitter la position d'emmanchement sous l'effet de son propre poids, ledit étranglement pouvant être franchi en exerçant un effort vers le bas pour le déplacement dudit ensemble vers la position de fixation.
- Ladite butée présente une surface supérieure propre à supporter ladite patte de façon que l'arbre soit sensiblement aligné avec le moyeu lorsque celui-ci repose sur ledit étranglement.
- L'orientation de passage est instable, le levier s'en écartant spontanément sous l'effet de la gravité.
- Le moteur et la paroi du boîtier présentent l'un un bossage et l'autre un évidement dont la coopération réalise un centrage mutuel au niveau de l'élément de fixation, et la pénétration du bossage dans l'évidement et la mise en prise de la patte et de la butée sont obtenues simultanément par un basculement du moteur autour d'une zone d'appui intermédiaire.
- Un jeu axial est prévu entre les saillies radiales et le bras du levier en regard de l'ouverture pour permettre ledit basculement, le bras venant sensiblement en contact avec la paroi du boîtier à distance de l'ouverture.

Les caractéristiques et avantages de l'invention seront exposés plus en détail dans la description ci-après, en se référant aux dessins annexés, sur lesquels:
- la figure 1 est une vue partielle de la face du boîtier d'un appareil de chauffage/ventilation ou de climatisation de l'habitacle d'un véhicule automobile sur laquelle doit être fixé le moteur d'un dispositif selon l'invention, le moyeu du levier étant représenté engagé dans l'ouverture;
- les figures 2 à 5 sont des vues partielles en coupe selon la ligne II-II de la figure 1, montrant des phases successives du montage du moteur sur le boîtier.

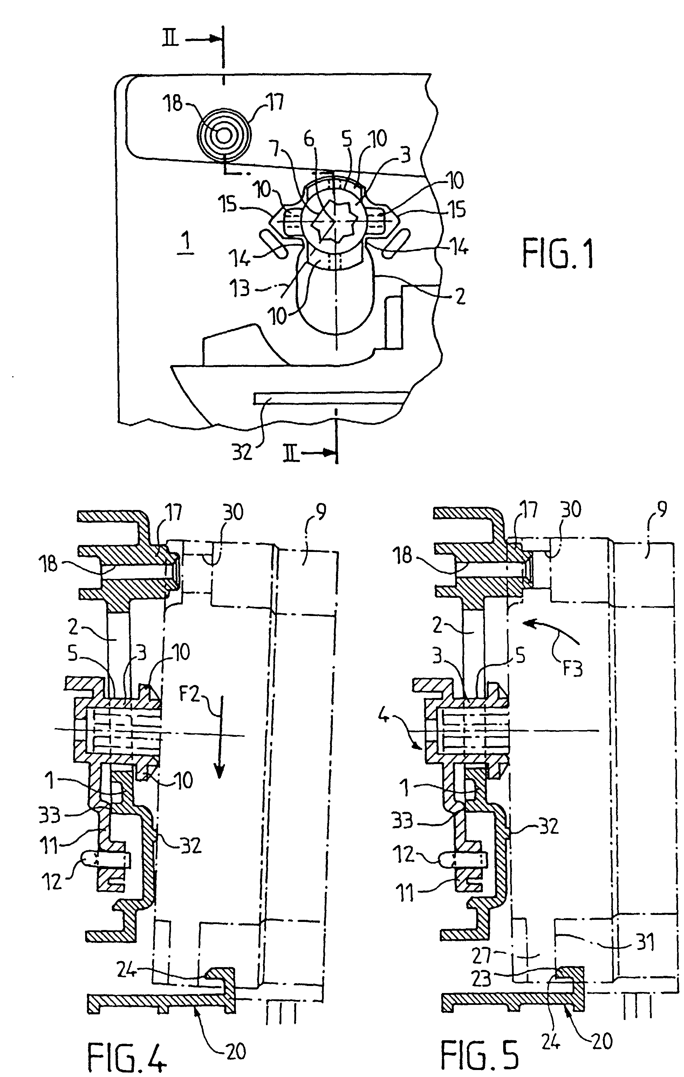

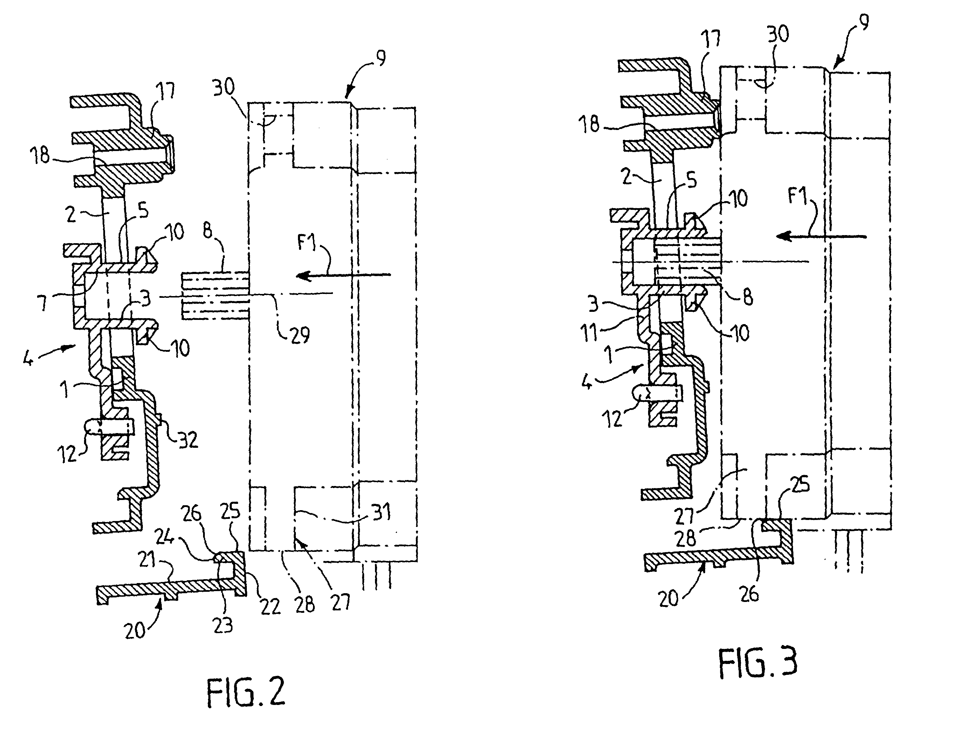

On voit sur la figure 1 une paroi 1 sensiblement verticale d'un appareil de chauffage/ventilation ou de climatisation de l'habitacle d'un véhicule, dans laquelle est ménagée une ouverture 2 traversée par le moyeu 3 d'un levier 4 (figures 2 à 5). Le moyeu 3 présente une surface extérieure 5 cylindrique de révolution autour d'un axe horizontal 6, et un alésage 7 qui n'est pas de révolution de façon à recevoir, dans une position angulaire relative déterminée, l'arbre de sortie 8 d'un moteur 9, présentant un profil conjugué de celui de l'alésage. Au voisinage de l'une de ses extrémités axiales, à l'extérieur du boîtier, le moyeu 5 présente quatre saillies radiales 10 disposées en croix. Un bras 11 part radialement du moyeu au voisinage de son autre extrémité, à l'intérieur du boîtier, ce bras étant lié, à distance de l'axe 6, à une tige métallique 12 de transmission de mouvement. Le bras 11, non représenté sur la figure 1, est disposé obliquement par rapport aux saillies 10, selon un axe longitudinal 13.

L'ouverture 2 de la paroi 1 est allongée dans la direction verticale et présente, à un endroit de sa hauteur, un étranglement 14 à une largeur légèrement inférieure au diamètre de la surface cylindrique 5 du moyeu, tandis que la largeur de l'ouverture est supérieure à ce diamètre au-dessus et au-dessous de l'étranglement. En outre, immédiatement au-dessus de l'étranglement, l'ouverture présente deux élargissements 15 symétriques l'un de l'autre par rapport à l'axe longitudinal de l'ouverture, qui lui donnent la forme générale d'une croix et qui permettent le passage de deux saillies 10 diamétralement opposées du moyeu 3. En même temps, les deux autres saillies 10 sont logées respectivement à l'extrémité supérieure de l'ouverture et au-dessous de l'étranglement 14. Le moyeu peut donc être introduit dans l'ouverture, de l'intérieur vers l'extérieur du boîtier, dans une orientation appropriée autour de l'axe 6, comme représenté sur la figure 1. Dans cette orientation, l'axe longitudinal 13 du bras est dirigé obliquement vers le bas. Lorsque les saillies 10 ont dépassé l'épaisseur de la paroi 1, le levier pivote sous l'effet du poids du bras. Il est alors immobilisé dans la direction axiale, vers l'extérieur du boîtier par la présence du bras 11 à l'intérieur de celui-ci, et vers l'intérieur par le fait que les saillies 10 ne sont plus en coïncidence avec l'ouverture 2. Par ailleurs, le moyeu s'appuie sur l'étranglement 14 de l'ouverture, ce qui définit également sa position verticale.

La paroi 1 présente un bossage circulaire 17 en saillie sur sa face extérieure, situé plus haut que l'ouverture 2. Dans l'axe du bossage 17 est ménagé un alésage traversant 18. Le boîtier de l'appareil comporte par ailleurs, au-dessous de l'ouverture 2, comme on le voit sur les figures 2 à 5, une nervure 20 faisant saillie vers l'extérieur à partir de la paroi 1 et comprenant une première branche 21 disposée sensiblement selon un plan horizontal, une seconde branche 22 s'élevant verticalement à partir de l'extrémité de la branche 21, et une troisième branche 23 de faible longueur revenant horizontalement en direction de la paroi 1 et se terminant par une face d'extrémité 24 sensiblement parallèle au plan général vertical de cette paroi. La branche 23 présente également une face supérieure horizontale 25 et un chanfrein 26 entre les faces 24 et 25.

Une patte 27 fait saillie vers le bas à la partie inférieure du moteur 9 et peut reposer par sa face inférieure 28 sur la face supérieure 25 de la nervure 20, l'axe 29 de l'arbre 8 se trouvant alors à la même hauteur que l'axe 6 du moyeu 3 qui repose sur l'étranglement 14 de l'ouverture 2 comme décrit plus haut. A partir de là, on peut faire glisser le moteur le long de la face 25 en direction de la paroi 1, comme indiqué par la flèche F1 sur les figures 2 et 3, pour emmancher l'arbre 8 dans le moyeu 3. Un évidement 30 du moteur prévu pour recevoir le bossage 17 est à ce moment décalé vers le haut par rapport à celui-ci. Lorsque la patte 27 a atteint l'extrémité libre de la branche 23 de la nervure 20, un mouvement vers le bas, comme indiqué par la flèche F2 sur la figure 4, permet d'amener à la fois cette patte entre la face 24 de la nervure et la paroi 1 et l'évidement 30 en regard du bossage 17, le moyeu 3 franchissant l'étranglement 14 grâce à une faible déformation élastique des pièces. Il est alors possible de faire légèrement basculer le moteur, selon la flèche F3 de la figure 5, pour engager le bossage 17 dans l'évidement 30 et amener la face 31 de la patte 27 tournée à l'opposé de la paroi 1 en appui sur la face 24 de la nervure 20. Ce basculement s'effectue autour d'une nervure 32 de faible épaisseur, allongée dans la direction horizontale, prévue sur la face extérieure de la paroi 1, entre l'ouverture 2 et la nervure 20. Au cours de ce mouvement, le bras 11 du levier 4 s'éloigne de la paroi 1 au voisinage du moyeu 5, tandis que les saillies 10 s'en rapprochent. Cependant, le bras 11 reste pratiquement en contact avec la paroi 1 en un endroit 33 écarté du moyeu, de sorte que le jeu axial entre le levier et la paroi du boîtier est faible. Le moteur est fixé dans sa position finale par une vis non représentée engagée dans l'alésage 18 et dans un alésage correspondant du moteur. Des moyens de butée non représentés, prévus sur la paroi 1 et/ou sur la nervure 20, immobilisent le moteur contre un pivotement autour de la vis, ce qui permet une fixation complète du moteur par cette seule vis.

## Revendications

1. Dispositif d'entraînement d'un organe mobile disposé à l'intérieur d'un boîtier, notamment pour le réglage d'un flux d'air dans un appareil de chauffage/ventilation ou de climatisation de l'habitacle d'un véhicule, comprenant un moteur (9) fixé extérieurement sur la paroi (1) du boîtier, comportant un arbre de sortie (8) en saillie vers l'intérieur du boîtier, et un levier (4) comportant un moyeu (3) monté fixe en rotation sur l'arbre et au moins un bras (11) s'étendant transversalement à l'axe (29) de l'arbre à l'intérieur du boîtier, le moyeu traversant une ouverture (2) ménagée dans la paroi du boîtier, caractérisé en ce que:
- le moteur est fixé au boîtier par un seul élément de fixation rapporté tel qu'une vis, son positionnement étant complété par une coopération de formes entre le moteur et le boîtier, une butée (20) solidaire de ce dernier, disposée par rapport à l'axe à une distance angulaire dudit élément de fixation supérieure à un angle droit, présentant une face d'appui (24) tournée vers le boîtier pour solliciter vers celui-ci une patte (27) solidaire du moteur;
- le moyeu présente des saillies radiales (10) en regard de la face extérieure de la paroi du boîtier, cette dernière étant emprisonnée axialement entre lesdites saillies radiales et le(s)dit(s) bras; et
- ladite ouverture est allongée et présente, en un endroit de sa longueur, des élargissements (15) permettant aux saillies radiales du moyeu de traverser l'ouverture de l'intérieur vers l'extérieur du boîtier lorsque le levier est dans une orientation déterminée, dite de passage, autour de l'axe de son moyeu,
l'ensemble formé par le moteur et le levier pouvant être déplacé à peu près parallèlement à la longueur de l'ouverture entre une position d'emmanchement où le moteur est libre de s'approcher ou de s'éloigner du boîtier dans la direction de l'axe pour engager l'arbre dans le moyeu ou l'en dégager, et une position de fixation dans laquelle la patte est retenue par la butée et l'élément de fixation peut être mis en place.

2. Dispositif selon la revendication 1, caractérisé en ce que l'ouverture est allongée sensiblement de haut et bas et que lesdits élargissements sont prévus dans sa région d'extrémité supérieure.

3. Dispositif selon la revendication 2, caractérisé en ce que l'élément de fixation et la butée sont disposés respectivement plus haut et plus bas que l'axe.

4. Dispositif selon l'une des revendications 2 et 3, caractérisé en ce que l'ouverture présente un étranglement (14) à une largeur légèrement inférieure au diamètre du moyeu pour interdire au levier de quitter la position d'emmanchement sous l'effet de son propre poids, ledit étranglement pouvant être franchi en exerçant un effort vers le bas pour le déplacement dudit ensemble vers la position de fixation.

5. Dispositif selon la revendication 4, caractérisé en ce que ladite butée (20) présente une surface supérieure (23) propre à supporter ladite patte (27) de façon que l'arbre soit sensiblement aligné avec le moyeu lorsque celui-ci repose sur ledit étranglement.

6. Dispositif selon l'une des revendications précédentes, caractérisé en ce que l'orientation de passage est instable, le levier s'en écartant spontanément sous l'effet de la gravité.

7. Dispositif selon l'une des revendications précédentes, caractérisé en ce que le moteur et la paroi du boîtier présentent l'un un bossage (17) et l'autre un évidement (30) dont la coopération réalise un centrage mutuel au niveau de l'élément de fixation, et en ce que la pénétration du bossage dans l'évidement et la mise en prise de la patte et de la butée sont obtenues simultanément par un basculement du moteur autour d'une zone d'appui intermédiaire (32).

8. Dispositif selon la revendication 7, caractérisé en ce qu'un jeu axial est prévu entre les saillies radiales et le bras du levier en regard de l'ouverture pour permettre ledit basculement, le bras venant sensiblement en contact (33) avec la paroi du boîtier à distance de l'ouverture.

## Patentansprüche

1. Antriebsvorrichtung für eine im Inneren eines Gehäuses angeordnete bewegliche Einrichtung, insbesondere zur Steuerung einer Luftströmung in einer Fahrzeuginnenraum-Heiz/Belüftungs- oder -Klimaanlage, umfassend einen Motor (9), der äußerlich an der Wandung (1) des Gehäuses befestigt ist, umfassend eine Abtriebswelle (8), die zu dem Inneren des Gehäuses vorspringt, und einen Hebel (4), welcher eine Nabe (3) umfaßt, die drehfest an der Welle montiert ist, und zumindest einen Arm (11), der sich quer zu der Achse (29) der Welle im Inneren des Gehäuses erstreckt, wobei die Nabe eine Öffnung (2) durchquert, die in der Wandung des Gehäuses ausgebildet ist, **dadurch gekennzeichnet, daß**
- der Motor durch ein einzelnes angebrachtes Befestigungselement, wie z.B. eine Schraube, an dem Gehäuse befestigt ist, wobei dessen Positionierung durch eine Formenwechselwirkung zwischen dem Motor und dem Gehäuse vervollständigt wird, wobei ein mit dem Gehäuse verbundener Anschlag (20), angeordnet bei einem winkelmäßigen Abstand von dem Befestigungselement mit Bezug auf die Achse, welcher größer ist als ein rechter Winkel, eine Anlagefläche (24) aufweist, die hin zu dem Gehäuse gedreht ist, um eine mit dem Motor verbundene Lasche (27) diesbezüglich zu beaufschlagen;
- die Nabe radiale Vorsprünge (10) gegenüberstehend der äußeren Fläche der Wandung des Gehäuses aufweist, wobei letztere axial zwischen den radialen Vorsprüngen und dem Arm bzw. den Armen eingefaßt ist; und daß
- die Öffnung länglich ausgebildet ist und an einem Ort der Länge Verbreiterungen (15) aufweist, die es den radialen Vorsprüngen der Nabe ermöglichen, die Öffnung von innerhalb nach außerhalb des Gehäuses zu durchqueren, wenn der Hebel in einer vorbestimmten sogenannten Durchtrittsausrichtung bzgl. der Achse seiner Nabe vorliegt,
wobei die durch den Motor und den Hebel gebildete Anordnung in etwa parallel zu der Längsrichtung der Öffnung zwischen einer Eingriffsposition, in der der Motor sich frei an das Gehäuse in der Richtung der Achse annähern oder sich entfernen kann, um die Welle mit der Nabe in Eingriff oder außer Eingriff zu bringen, und einer Befestigungsposition versetzt werden kann, in welcher die Lasche durch den Anschlag zurückgehalten ist, wobei das Befestigungselement angeordnet werden kann.

2. Vorrichtung nach Anspruch 1, **dadurch gekennzeichnet, daß** die Öffnung im wesentlichen von oben nach unten länglich ausgebildet ist, und daß die Verbreiterungen in deren oberem Endabschnitt vorgesehen sind.

3. Vorrichtung nach Anspruch 2, **dadurch gekennzeichnet, daß** das Befestigungselement und der Anschlag jeweils höher und niedriger als die Achse angeordnet sind.

4. Vorrichtung nach einem der Ansprüche 2 und 3, **dadurch gekennzeichnet, daß** die Öffnung eine Verjüngung (14) bei einer leicht geringeren Breite als dem Durchmesser der Nabe aufweist, um den Hebel davon abzuhalten, die Eingriffsposition unter Wirkung des Eigengewichtes zu verlassen, wobei die Verjüngung überschritten werden kann, indem eine Kraft nach unten zur Versetzung der Anordnung hin zu der Befestigungsposition ausgeübt wird.

5. Vorrichtung nach Anspruch 4, **dadurch gekennzeichnet, daß** der Anschlag (20) eine obere Fläche (23) aufweist, die geeignet ist, die Lasche (27) in solch einer Weise zu stützen, daß die Welle im wesentlichen mit der Nabe ausgerichtet ist, wenn diese an der Verjüngung ruht.

6. Vorrichtung nach einem der vorangegangenen Ansprüche, **dadurch gekennzeichnet, daß** die Durchtrittsausrichtung instabil ist, wobei der Hebel diese spontan unter dem Einfluß der Schwerkraft verläßt.

7. Vorrichtung nach einem der vorangegangenen Ansprüche, **dadurch gekennzeichnet, daß** an dem Motor bzw. der Wandung des Gehäuses ein Höcker (17) bzw. eine Aussparung (30) ausgebildet ist, wobei deren Wechselwirkung eine wechselseitige Zentrierung auf dem Niveau des Befestigungselementes darstellt, und daß das Eindringen des Höckers in die Aussparung und das In-Eingrifftreten der Lasche und des Anschlags gleichzeitig durch ein Schwenken des Motors um eine zwischengelagerte Anlagezone (32) erhalten werden.

8. Vorrichtung nach Anspruch (7), **dadurch gekennzeichnet, daß** ein axiales Spiel zwischen den radialen Vorsprüngen und dem Arm des Hebels, gegenüberstehend der Öffnung, vorgesehen ist, um das Schwenken zu ermöglichen, wobei der Arm im wesentlichen mit der Wandung des Gehäuses bei einem Abstand von der Öffnung in Berührung (33) tritt.

## Claims

1. Device for driving a movable member disposed inside a housing, notably for adjusting an air flow in an appliance for heating/ventilating or air conditioning the passenger compartment of a vehicle, comprising a motor (9) fixed externally to the wall (1) of the housing, having an output shaft (8) projecting towards the inside of the housing, and a lever (4) having a hub (3) mounted so as to be fixed with respect to rotation on the shaft and at least one arm (11) extending transversely to the axis (29) of the shaft inside the housing, the hub passing through an opening (2) provided in the wall of the housing, characterised in that:
- the motor is fixed to the housing by a single attached fixing element such as a screw, its positioning being supplemented by a cooperation of shapes between the motor and the housing, a stop (20) fixed to the latter, disposed with respect to the axis at an angular distance from the said fixing element greater than a right-angle, having an abutment face (24) turned towards the housing in order to force towards the latter a lug (27) fixed to the motor;
- the hub has radial projections (10) opposite the external face of the wall of the housing, the latter being trapped axially between the said radial projections and the said arm or arms; and
- the said opening is elongate and has, at one point on its length, enlarged parts (15) enabling the radial projections on the hub to pass through the opening from the inside towards the outside of the housing when the lever is in a given orientation, referred to as the passage orientation, about the axis of its hub,
the assembly formed by the motor and lever being able to be moved approximately parallel to the length of the opening between an engagement position in which the motor is free to approach or move away from the housing in the direction of the axis in order to engage the shaft in the hub or to disengage it therefrom, and a fixing position in which the lug is held by the stop and the fixing element can be put in place.

2. Device according to Claim 1, characterised in that the opening is elongated substantially from top to bottom and the said enlargements are provided in its top end region.

3. Device according to Claim 2, characterised in that the fixing element and stop are disposed respectively higher and lower than the axis.

4. Device according to one of Claims 2 and 3, characterised in that the opening has a contraction (14) with a width slightly less than the diameter of the hub in order to prevent the lever from leaving the engagement position under the effect of its own weight, the said contraction being able to be passed by exerting a force downwards for moving the said assembly towards the fixing position.

5. Device according to Claim 4, characterised in that the said stop (20) has a top surface (23) able to support the said lug (27) so that the shaft is substantially aligned with the hub when the latter is resting on the said contraction.

6. Device according to one of the preceding claims, characterised in that the passage orientation is unstable, the lever moving away from it spontaneously under the effect of gravity.

7. Device according to one of the preceding claims, characterised in that the engine and wall of the housing have in one case a protrusion (17) and in the other case a recess (30), whose cooperation produces a mutual centring at the level of the fixing element, and in that the penetration of the protrusion into the recess and the putting into engagement of the lug and stop are obtained simultaneously by a tilting of the motor about an intermediate abutment area (32).

8. Device according to Claim 7, characterised in that an axial clearance is provided between the radial projections and the arm of the lever opposite the opening to allow the said tilting, the arm coming substantially into contact (33) with the wall of the housing at a distance from the opening.
